# EUROPEAN PATENT APPLICATION

(11) **EP 4 557 558 A1**
(43) Date of publication of application: **21.05.2025**
(21) Application number: 22959132.6
(22) Date of filing: 22.09.2022
(51) Int. Cl.: H02J 7/00, H01M 10/6571, H01M 10/637

(54) **ADJUSTING METHOD FOR ADJUSTING CIRCUIT OF BATTERY, CONTROL METHOD FOR BATTERY, AND MONITORING METHOD FOR BATTERY**

(71) Applicant: CONTEMPORARY AMPEREX TECHNOLOGY (HONG KONG) LIMITED, Central (HK)
(72) Inventor: CAI, Feilong, Ningde, Fujian 352100 (CN); HUANG, Xiaojian, Ningde, Fujian 352100 (CN); LIU, Diping, Ningde, Fujian 352100 (CN); PAN, Xianxi, Ningde, Fujian 352100 (CN)
(74) Representative: Ran, Handong
(86) International application number: PCT/CN2022/120488
(87) International publication number: WO 2024/060122

(57) **Abstract**

The present application provides an adjusting method for an adjusting circuit of a battery, a control method for a battery, and a monitoring method for a battery. The adjusting method comprises: determining whether to adjust a battery; and in response to determining to adjust the battery, at least controlling a plurality of switching devices of a bridge arm group, so as to form a current loop having a first current direction or a current loop having a second current direction between the battery and a power module, wherein the first current direction and the second current direction are opposite at the battery. By means of the implementation, pulse heating can be performed on the battery, so as to meet the requirement of normal operation of the battery.

## Description

### TECHNICAL FIELD

This application relates to the technical field of batteries, and in particular, to a regulating method and regulating apparatus of a regulating circuit for a battery, a control method and control apparatus for a battery, a monitoring method and monitoring apparatus for a battery, an electronic device, a computer-readable storage medium, and a computer program product.

### BACKGROUND

With the advancement of battery technology, using batteries to power electric devices has become increasingly popular.

In some cases, the external properties of batteries are easily affected by the ambient temperature. For example, in a low-temperature environment, the battery capacity will decrease, making it impossible for the battery to be fully charged, thus reducing the service life and effective capacity of the battery. Therefore, in some environments, the battery needs to be pre-heated to bring it to a normal operating temperature.

How batteries are heated to meet normal operation requirements is a technical issue to be urgently addressed in this field.

### SUMMARY

This application is intended to resolve at least one of the foregoing technical problems in the prior art. For this purpose, one objective of this application is to propose a regulating method and regulating apparatus of a regulating circuit for a battery, a control method and control apparatus for a battery, a monitoring method and monitoring apparatus for a battery, an electronic device, a computer-readable storage medium, and a computer program product, so as to regulate the battery to meet requirements for normal battery operation.

Embodiments of a first aspect of this application provide a regulating method of a regulating circuit for a battery. The regulating circuit includes a power module and a battery side configured to connect to the battery, where the power module includes a bridge arm set and at least one inductive member, the bridge arm set being connected in parallel with the battery and including multiple switching devices, and a first end of each inductive member being connected to the bridge arm set. The regulating method includes: determining whether to regulate the battery; and at least controlling, in response to determining to regulate the battery, the multiple switching devices of the bridge arm set to form a current loop with a first current direction or a current loop with a second current direction between the battery and the power module, where the first current direction and the second current direction are opposite at the battery.

In the technical solution of this application, the switching devices in the power module are controlled to form current loops with different current directions between the power module and the battery, so that the power module can be used to charge and discharge the battery, thus implementing battery regulation (for example, pulse heating) to meet requirements for normal battery operation.

In some embodiments, the bridge arm set includes at least one bridge arm, each bridge arm includes at least two corresponding switching devices among the multiple switching devices, and the first end of each inductive member is connected between two switching devices of a corresponding bridge arm among the at least one bridge arm. The at least controlling, in response to determining to regulate the regulating circuit, the multiple switching devices of the bridge arm set to form a current loop with a first current direction or a current loop with a second current direction between the battery and the power module includes: controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module. This can ensure that the formed current loop passes through the inductive member in the power module, so as to use the inductive member in the power module to charge and discharge the battery, thus implementing regulation of the battery (for example, pulse heating).

In some embodiments, the at least one bridge arm includes multiple bridge arms connected in parallel, and the at least one inductive member includes multiple inductive members, second ends of the inductive members being connected to each other. The controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module includes: controlling the switching device of a part of the multiple bridge arms between a corresponding inductive member and a first end of the battery side to turn on and the switching device of the part of the multiple bridge arms between the corresponding inductive member and a second end of the battery side to turn off, and controlling the switching device of another part of the multiple bridge arms between a corresponding inductive member and the second end of the battery side to turn on and the switching device of the another part of the multiple bridge arms between the corresponding inductive member and the first end of the battery side to turn off, to form the current loop with the first current direction; and controlling the on switching devices among the multiple switching devices to turn off and the off switching devices among the multiple switching devices to turn on, to form the current loop with the second current direction. First, for example, the upper bridge arm and lower bridge arm in a part of the bridge arms are controlled to turn on and off respectively, and the upper bridge arm and lower bridge arm in another part of the bridge arms are controlled to turn off and on respectively, so that a current loop with the first battery direction is formed between the battery and the power module through the inductive member. Then, the on switching devices are controlled to turn off and the off switching devices are controlled to turn on, so that the current direction at the battery can be quickly changed through the lagging effect of the inductive member on the current change (that is, through the continuous flow of current at the inductive member), thus quickly forming a current loop with the second battery direction. In the above embodiment, the lagging effect of the inductive member on the current change is fully utilized to quickly change the current direction in the current loop for charging and discharging the battery, thus preventing the inductive member from obstructing the current commutation, improving the frequency of battery regulation (for example, pulse heating), and improving the efficiency of battery regulation (for example, heating).

In some embodiments, the regulating circuit further includes a battery capacitor, a first end of the battery capacitor being connected to a second end of each inductive member, and a second end of the battery capacitor being connected to a second end of the battery side. The controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module includes: controlling the switching device of each bridge arm between a corresponding inductive member and a first end of the battery side to turn on and the switching device of each bridge arm between the corresponding inductive member and a second end of the battery side to turn off, to form the current loop with the first current direction; and at least controlling the switching device of each bridge arm between a corresponding inductive member and the second end of the battery side to turn off, to form the current loop with the second current direction. In the above embodiment, a current loop passing through the inductive member and the battery capacitor can be formed, so that the resonance effect of the inductive member and the capacitor can be used to regulate the battery (for example, charging and discharging), improving the efficiency of battery regulation (for example, heating).

In some embodiments, the multiple switching devices are power semiconductor devices, and the at least controlling the switching device of each bridge arm between a corresponding inductive member and the second end of the battery side to turn off, to form the current loop with the second current direction includes: controlling all switching devices of each bridge arm to turn off to form a current loop with a third current direction between the battery capacitor and the bridge arm set; controlling the switching device of each bridge arm between a corresponding inductive member and the second end of the battery side to turn on to form a current loop with a fourth current direction between the battery capacitor and the bridge arm set, where the third current direction and the fourth current direction are opposite at each inductive member; and controlling the switching device of each bridge arm between the corresponding inductive member and the second end of the battery side to turn off, to form the current loop with the second current direction.

After the current loop with the first current direction is formed for a period of time, the energy exchange between the capacitors of the battery and the power module causes the voltage of the battery capacitor in the power module to approach the voltage of the battery, which affects the resonance between the battery capacitor and the inductive member, thus affecting the pulse heating of the battery. Therefore, all the switching devices need to turn off first, so that the energy of the inductive member continues to flow through the diode in the power semiconductor switching device in the bridge arm. Then, the lower bridge arm of each bridge arm is controlled to turn on, so that the battery capacitor charges the inductive member, thus reducing the voltage of the battery capacitor and changing the current direction at the inductive member. Therefore, according to the above embodiments, the resonance effect between the inductive member and the battery capacitor can be restored. Moreover, after the current direction at the inductive member is changed, the current direction at the battery can be quickly changed through the lagging effect of the inductive member on the current change, to quickly form a current loop with the second battery direction, thus increasing the frequency of pulse heating and improving the efficiency of battery heating.

In some embodiments, the regulating circuit further includes a first control switch and a bus side configured to connect to an external power source, a first end of the first control switch is connected to a first end of the bus side, a second end of the first control switch is connected to a first end of the bridge arm set, and a second end of the bus side is connected to a second end of the bridge arm set. The at least controlling, in response to determining to regulate the regulating circuit, the multiple switching devices of the bridge arm set to form a current loop with a first current direction or a current loop with a second current direction between the battery and the power module includes: at least controlling the first control switch to turn off; and controlling the multiple switching devices of the bridge arm set to form the current loop with the first current direction or the current loop with the second current direction between the battery and the power module. With arrangement of the first control switch connected between the bus side and the power module, the power module can be disconnected from the bus side by turning off the first control switch before heating of the battery, thus enabling the power module to independently regulate the battery (for example, heating) and preventing the external power source on the bus side from affecting the regulation (for example, heating) of the battery.

In some embodiments, the regulating circuit further includes a second control switch and a third control switch, a first end of the second control switch is connected to the second end of the first control switch, a second end of the second control switch is connected to the first end of the battery side, a first end of the third control switch is connected to the second end of each inductive member, and a second end of the third control switch is connected to the second end of the second control switch; and the at least controlling the first control switch to turn off includes: controlling the first control switch and the third control switch to turn off and the second control switch to turn on. With the first control switch and the third control switch turned off and the second control switch turned on, the regulating circuit can enter the battery regulation (for example, heating) mode. In addition, if the current loop for heating the battery is implemented through the path where the third control switch is located, the current needs to flow back to the battery through the capacitor on the bus side after passing through the inductive member. This may cause circuit instability. Therefore, compared to turning on the third control switch, implementing a current loop for regulating (for example, heating) the battery through the path where the second control switch is located can prevent the current from flowing into the capacitor on the bus side after passing through the inductive member, allowing for more stable battery heating.

In some embodiments, the determining whether to regulate the battery includes: determining whether a regulation instruction is received, where the regulation instruction is used to instruct to regulate the battery; and in response to determining that the regulation instruction is received, determining to regulate the battery. In this way, the battery can be regulated (for example, heated) as needed to meet requirements for normal battery operation.

In some embodiments, the regulating method further includes: determining whether a stop regulation instruction is received, where the stop regulation instruction is used to instruct to stop regulating the battery; and in response to determining that the stop regulation instruction is received, at least controlling all of the multiple switching devices to turn off, to stop regulating the battery. In this way, battery regulation (for example, heating) can be stopped as needed, to prevent overheating of the battery or ineffective heating of the battery (for example, continuing to heat the battery in case of battery failure or continuing to heat the battery in case of abnormal battery temperature rise), thus increasing the safety of battery heating.

A second aspect of embodiments of this application provides a control method for a battery, including: obtaining state information of the battery, where the state information includes an initial temperature; determining whether the initial temperature is less than a first preset temperature threshold; and sending, in response to determining that the initial temperature is less than the first preset temperature threshold, a regulation instruction to the regulating circuit, where the regulation instruction is used to execute the regulating method according to the first aspect of this application. In this way, the battery can be regulated (for example, heated) as needed to meet requirements for normal battery operation.

In some embodiments, the state information further includes a state of charge and a voltage. The sending, in response to determining that the initial temperature is less than the first preset temperature threshold, a regulation instruction to the regulating circuit includes: sending, in response to a first preset condition being met, the regulation instruction to the regulating circuit, where the first preset condition includes at least one of the state of charge being greater than or equal to a preset state of charge threshold and the voltage being greater than or equal to a preset voltage threshold. In this way, the battery can be regulated (for example, heated) when the voltage and/or state of charge of the battery meets a specific condition, thus increasing the efficiency of battery regulation (for example, heating).

In some embodiments, the sending, in response to a first preset condition being met, the regulation instruction to the regulating circuit includes: determining whether the regulating circuit has a fault; and in response to determining that the regulating circuit does not have a fault, sending the regulation instruction to the regulating circuit. In this way, the battery can be regulated in the case of no fault in the regulating circuit, thus improving the safety of battery regulation.

In some embodiments, the control method includes: determining whether temperature rise state information of the battery is received, where the temperature rise state information includes temperature rise exception information or temperature rise complete information; and in response to the temperature rise state information being received, sending a stop regulation instruction to the regulating circuit, where the stop regulation instruction is used to execute the regulating method according to the first aspect of this application. This can prevent over-regulation (for example, heating) or ineffective regulation (for example, heating) of the battery, thus improving the safety of battery heating.

A third aspect of embodiments of this application provides a monitoring method for a battery, including: collecting current state information of the battery at a current moment, where the current state information includes a current temperature; and determining, at least based on the current temperature, whether to send temperature rise state information to an upper-layer controller, where the temperature rise state information is used for executing the control method according to the second aspect of this application. This facilitates real-time monitoring of the battery state and prevents over-regulation (for example, heating) or ineffective regulation (for example, heating) of the battery, thus improving the safety of battery heating.

In some embodiments, the determining, at least based on the current temperature, whether to send temperature rise state information to an upper-layer controller includes: determining whether the current temperature is greater than or equal to a second preset temperature threshold; and in response to determining that the current temperature is greater than or equal to the second preset temperature threshold, generating temperature rise complete information as the temperature rise state information. This facilitates real-time monitoring of the battery state, preventing overheating of the battery.

In some embodiments, the determining, at least based on the current temperature, whether to send temperature rise state information to an upper-layer controller includes: obtaining a historical temperature of the battery at a historical moment; determining, based on the current temperature and the historical temperature, whether the battery is under an abnormal temperature rise; and in response to determining that the battery is under an abnormal temperature rise, generating temperature rise exception information as the temperature rise state information. This facilitates real-time monitoring of the battery state, preventing ineffective heating of the battery.

A fourth aspect of embodiments of this application provides a regulating apparatus of a regulating circuit for a battery. The regulating circuit includes a power module and a battery side configured to connect to the battery, where the power module includes a bridge arm set and at least one inductive member, the bridge arm set being connected in parallel with the battery and including multiple switching devices, and a first end of each inductive member being connected to the bridge arm set. The regulating apparatus includes: a first determining module, the first determining module being configured to determine whether to regulate the battery; and a control module, the control module being configured to at least control, in response to determining to regulate the battery, the multiple switching devices of the bridge arm set to form a current loop with a first current direction or a current loop with a second current direction between the battery and the power module, where the first current direction and the second current direction are opposite at the battery. The solution in this embodiment can achieve the same technical effects as the corresponding regulating method described above.

A fifth aspect of embodiments of this application provides a control apparatus for a battery, including: an obtaining module, the obtaining module being configured to obtain state information of the battery, where the state information includes an initial temperature; a second determining module, the second determining module being configured to determine whether the initial temperature is less than a first preset temperature threshold; and a first sending module, the first sending module being configured to send, in response to determining that the initial temperature is less than the first preset temperature threshold, a regulation instruction to the regulating circuit, where the regulation instruction is used to execute the regulating method according to the first aspect of this application. The solution in this embodiment can achieve the same technical effects as the corresponding control method described above.

A sixth aspect of embodiments of this application provides a monitoring apparatus for a battery, including: a collection module, the collection module being configured to collect current state information of the battery at a current moment, where the current state information includes a current temperature; and a second sending module, the second sending module being configured to determine, at least based on the current temperature, whether to send temperature rise state information to an upper-layer controller, where the temperature rise state information is used for executing the control method according to the second aspect of this application. The solution in this embodiment can achieve the same technical effects as the corresponding monitoring method described above.

A seventh aspect of embodiments of this application provides an electronic device including at least one processor and a memory communicatively connected to the at least one processor, where the memory stores an instruction executable by the at least one processor, and the instruction, when executed by the at least one processor, causes the at least one processor to execute the regulating method according to the first aspect of this application or the control method according to the second aspect of this application or the monitoring method according to the third aspect of this application.

An eighth aspect of embodiments of this application provides a computer-readable storage medium storing a computer instruction, where the computer instruction is used to cause a computer to execute the regulating method according to the first aspect of this application or the control method according to the second aspect of this application or the monitoring method according to the third aspect of this application.

A ninth aspect of embodiments of this application provides a computer program product including a computer program, where the computer program, when executed by a processor, implements the regulating method according to the first aspect of this application or the control method according to the second aspect of this application or the monitoring method according to the third aspect of this application.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

In the accompanying drawings, unless otherwise specified, same reference signs throughout a plurality of accompanying drawings indicate the same or similar components or elements. These accompanying drawings may not necessarily be drawn to scale. It should be understood that these accompanying drawings illustrate only some embodiments disclosed in this application and should not be construed as limitations on the scope of this application.
FIG. 1 is a schematic structural diagram of a vehicle according to some embodiments of this application;
FIG. 2 is a schematic structural diagram of an energy storage system according to some embodiments of this application;
FIG. 3 is a schematic circuit diagram of a regulating circuit according to some embodiments of this application;
FIG. 4 is a schematic circuit diagram of a regulating circuit according to some other embodiments of this application;
FIG. 5 is a schematic circuit diagram of a regulating circuit according to some other embodiments of this application;
FIG. 6 is a flowchart of a regulating method according to some embodiments of this application;
FIG. 7a and FIG. 7b are schematic circuit diagrams of the regulating circuit in some states in FIG. 3, where FIG. 7a shows a current loop with a first current direction, and FIG. 7b shows a current loop with a second current direction;
FIG. 8a to FIG. 8d are schematic circuit diagrams of the regulating circuit in some other states in FIG. 3, where FIG. 8a shows a current loop with a first current direction, FIG. 8b shows a current loop with a third current direction, FIG. 8c shows a current loop with a fourth current direction, and FIG. 8d shows a current loop with a second current direction;
FIG. 9 is a flowchart of a control method according to some embodiments;
FIG. 10 is a flowchart of a monitoring method according to some embodiments;
FIG. 11 is a structural block diagram of a regulating apparatus according to some embodiments of this application;
FIG. 12 is a structural block diagram of a control apparatus according to some embodiments of this application;
FIG. 13 is a structural block diagram of a monitoring apparatus according to some embodiments of this application; and
FIG. 14 is a flowchart of a heating method according to some other embodiments of this application.

Description of reference signs:
vehicle 1000; battery 100.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as suitable to specific situations.

Currently, from a perspective of market development, application of batteries is becoming more extensive. Batteries are used as traction batteries or energy storage batteries. Batteries are not only used as energy storage batteries in energy storage power systems such as hydropower, thermal power, wind power, and solar power stations, but are also widely used as traction batteries in electric bicycles, electric motorcycles, electric vehicles, and other electric transportation vehicles, as well as in military equipment and aerospace. With continuous expansion of application fields of batteries, market demands for batteries are also expanding.

The applicant has noted that the external properties of batteries are easily affected by ambient temperature. For example, in a low-temperature environment, the battery capacity will decrease, making it impossible for the battery to be fully charged, thus reducing the service life and effective capacity of the battery.

To avoid the problem of reduced battery capacity, the applicant, through in-depth research, provides a regulating method of a regulating circuit and regulating apparatus for a battery, a control method and control apparatus for a battery, a monitoring method and monitoring apparatus for a battery, an electronic device, a computer-readable storage medium, and a computer program product, to facilitate heating of the battery to meet requirements for normal battery operation.

According to the solution in the embodiments of this application, current loops with different current directions are formed between the power module and the battery by controlling the switching devices in the power module, so that the power module can be used to regulate the battery (for example, pulse heating) to meet requirements for normal battery operation.

The regulating method, control method, and monitoring method disclosed in the embodiments of this application can be applied to energy storage devices (such as batteries). The battery may be a lithium-ion battery, a lithium metal battery, a lead-acid battery, a nickel-cadmium battery, a nickel-metal hydride battery, a lithium-sulfur battery, a lithium-air battery, a sodium-ion battery, or the like, which is not limited herein. The battery can be used in an energy storage system. In addition, the battery can also be used without limitation in electric apparatuses such as vehicles, ships, or aircraft. The electric apparatus may be but is not limited to a mobile phone, a tablet computer, a laptop computer, an electric toy, an electric tool, an electric bicycle, an electric vehicle, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like. This helps to meet the requirements for charging and discharging voltages and operating temperatures of the battery in different scenarios.

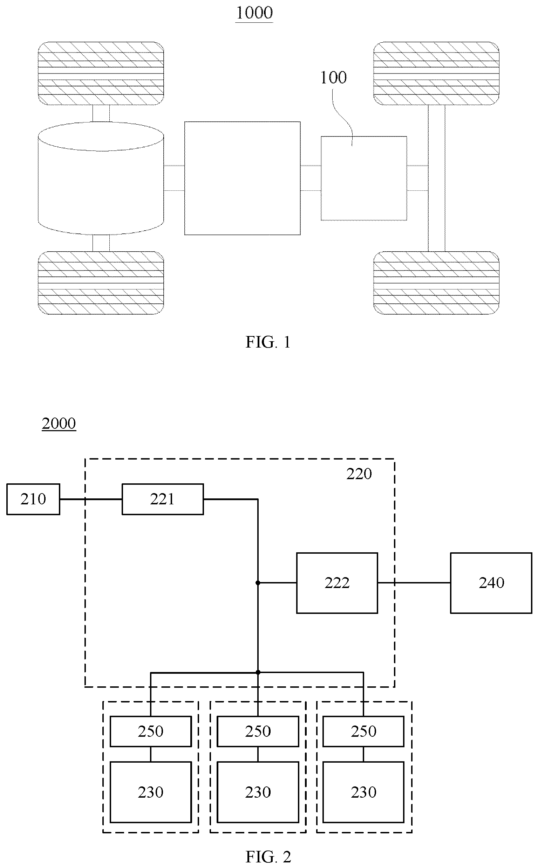

The regulating method, control method, and monitoring method in the embodiments of this application can be used in energy storage systems to regulate the batteries in the energy storage systems, and can also be used in electric apparatuses such as vehicles, ships, or aircraft to regulate the batteries in the electric apparatuses. In the energy storage system, the battery regulated by the regulating circuit stores and supplies electrical energy as an energy storage device of the energy storage system. In the electric apparatus, for example, in a vehicle 1000 shown in FIG. 1, a battery 100 regulated by a regulating circuit can be used to power the vehicle 1000. For example, the battery 100 can be used as an operational power source of the vehicle 1000, for example, to satisfy power needs of start, navigation, and running of the vehicle 1000. In addition, the battery 100 can also be used as a driving power source for the vehicle 1000, replacing or partially replacing fuel or natural gas to provide driving power for the vehicle 1000.

FIG. 2 is a schematic structural diagram of an energy storage system 2000 provided by some embodiments of this application. The energy storage system 2000 may include a power generation system 210, a power converter system (Power Converter System, PCS) 220, a battery 230, a power grid 240, and a regulating circuit 250. The power generation system 210 may be any power generation system that generates electrical energy by utilizing energy, such as a photovoltaic power generation system or a wind power generation system. The power generation system 210 can be used to supply its generated electrical energy to the power grid 240 and the battery 230. The power grid 240 may include a power plant, a substation, a power line, or the like, and can be used to supply power to the battery 230 or receive electrical energy from the battery 230 or the power generation system 210. In this specification, the power generation system 210 and the power grid 240 can be collectively referred to as external power sources. It should also be noted that although the energy storage system 2000 in FIG. 2 includes both the power generation system 210 and the power grid 240, in some other embodiments, the external power source of the energy storage system 2000 can include only the power generation system 210, or only the power grid 240, or can include more external power sources, and this application is not limited thereto. The battery 230 may be, for example, any battery described above, and is configured to store the electrical energy supplied by the power generation system 210 and/or the power grid 240, or supply electrical energy to the power grid 240. The battery 230 may include at least one battery, and each battery is connected to one regulating circuit 250 configured to regulate the voltage transmitted to or delivered from the battery. The power converter system 220 is connected to the power generation system 210, the battery 230, and the power grid 240. The power converter system 220 may include a power control apparatus 221 (such as an MPPT control circuit), a DC/AC conversion circuit 222, and the like, and is used to convert the electrical energy from the power generation system 210, the power grid 240, and the battery 230 into suitable electrical energy, and supply power to where electrical energy is needed.

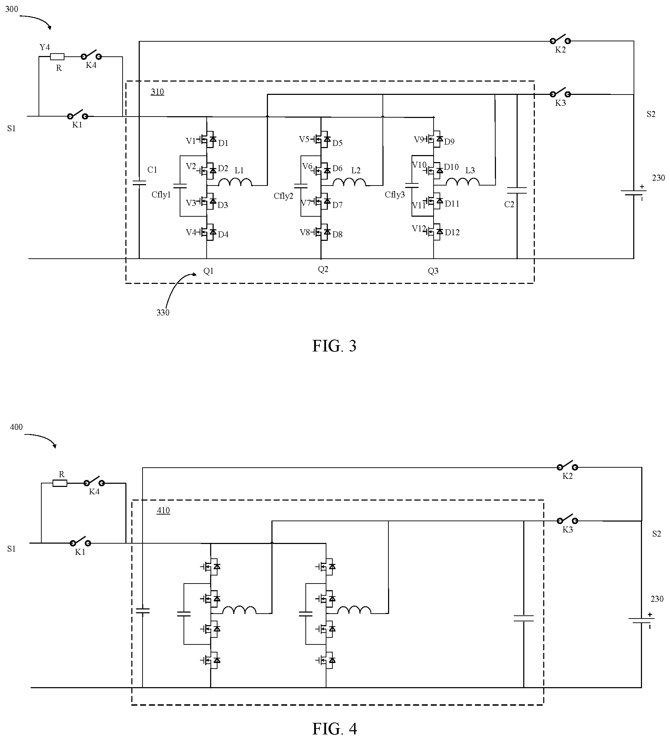

Referring to FIG. 3, FIG. 3 is a schematic circuit diagram of a regulating circuit 300 provided by some embodiments of this application. The regulating circuit 300 may be a specific embodiment of the regulating circuit 250 described in FIG. 2. The regulating circuit 300 may include: a power module 310 and a battery side S2 configured to connect to the battery 230. The power module 310 may include a bridge arm set 330 and at least one inductive member L1, L2, or L3. The bridge arm set 330 is connected in parallel with the battery and includes multiple switching devices V1, V2, ..., and V12. A first end of each inductive member is connected to the bridge arm set, and second ends of the inductive members are connected to each other. For example, specifically, the bridge arm set 330 includes at least one bridge arm, and each bridge arm includes an upper bridge arm and a lower bridge arm. In this specification, generally, a portion of the bridge arm located above the inductive member (for example, the upper part shown in FIG. 3) (that is, the portion between the inductive member and the first end of the battery) is referred to as the upper bridge arm, and a portion of the bridge arm located below the inductive member (for example, the lower part shown in FIG. 3) (that is, the portion between the inductive member and a second end of the battery) is referred to as the lower bridge arm. The bridge arm set 330 being connected in parallel with the battery can, for example, mean that a connection point of the upper bridge arm of the at least one bridge arm is connected to one end of the battery and a connection point of the lower bridge arm of the at least one bridge arm is connected to the other end of the battery. The first end of each inductive member being connected to the bridge arm set may, for example, mean that a connection point between the upper bridge arm and lower bridge arm of the at least one bridge arm is connected to the first end of the inductive member.

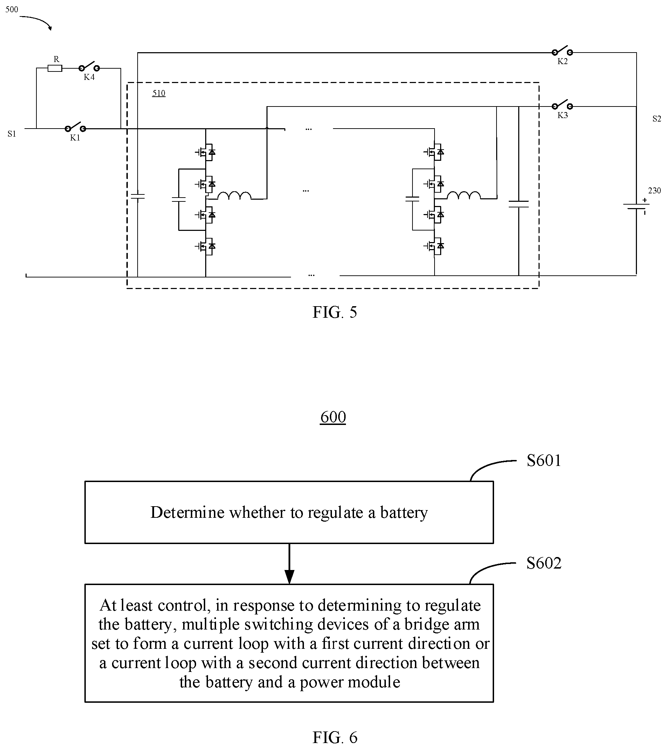

Although FIG. 3 shows an example of the power module, the power module can be a module of any topology and capable of regulating the voltage in the circuit. For example, the power module can use a non-multi-level topology (for example, a structure of the power module 310 in which flying capacitors Cfly1, Cfly2, and Cfly3 in bridge arms Q1, Q2, and Q3 are removed) or a multi-level topology (such as the power module 310 shown in FIG. 3 (with flying capacitors Cfly1, Cfly2, and Cfly3), the power module 410 of the regulating circuit 400 shown in FIG. 4, or the power module 510 of the regulating circuit 500 shown in FIG. 5) as needed. In addition, the power module may have a single bridge arm, double bridge arms (such as the two bridge arms in the power module 410 shown in FIG. 4), triple bridge arms (such as the three bridge arms Q1, Q2, and Q3 in the power module 310 shown in FIG. 3), more bridge arms (such as the multiple bridge arms in the power module 510 shown in FIG. 5), or the like.

In some embodiments, as shown in FIG. 3, the bridge arm set 330 of the power module 310 includes at least one bridge arm Q1, Q2, and Q3 connected in parallel. Each bridge arm includes at least two corresponding switching devices among the multiple switching devices. The first end of each inductive member is connected between two switching devices of a corresponding bridge arm among the multiple bridge arms (that is, connected to a connection point between an upper bridge arm and a lower bridge arm of the corresponding bridge arm). For example, taking the bridge arm Q1 as an example, the bridge arm Q1 includes at least two switching devices V1, V2, V3, and V4 among the multiple switching devices V1, V2, ..., and V12, and a first end of the inductive member L1 is connected between the two switching devices V2 and V3 of the bridge arm Q1. The structures of the bridge arms Q2, Q3 and their connection with the corresponding inductive members L2 and L3 are the same as those of the bridge arm Q1 and are not detailed herein.

It should be understood that the number of inductive members can be the same as the number of bridge arms. Alternatively, the number of inductive members can be different from the number of bridge arms, for example, less than or more than the number of bridge arms. Specifically, one bridge arm can be connected to one inductive member, as shown in FIGs. 3 to 5. Alternatively, the bridge arm can be not connected to any inductive member, or can be connected to multiple inductive members. Multiple inductive members connected to the same bridge arm can be connected in series or in parallel, and this application is not limited thereto. The first end of the inductive member can be connected in the middle of the bridge arm, meaning that the inductive member has the same number of switching devices on two sides. Additionally, or alternatively, the first end of the inductive member can be connected between any two switching devices that are not in the middle of the bridge arm, meaning that the numbers of switching devices on two sides of the inductive member are different.

In some embodiments, the multiple switching devices V1, V2, ..., and V12 may be controllable switching devices, such as contactors or power semiconductor devices. The power semiconductor devices may include devices such as IGBTs (Insulated Gate Bipolar Transistor), MOSFETs, and triodes. For example, as shown in FIG. 3, the multiple switching devices V1, V2, ..., and V12 are power semiconductor devices, and the switching device V1, V2, ..., and V12 include respective diodes D1, D2, ..., and D12. For example, the switching device V1 includes the diode D1. This allows the current to pass through the power semiconductor device even when the power semiconductor device is in the off state, as long as the current direction is consistent with the conduction direction of the diode.

In some embodiments, the inductive member may include an inductor or other devices that can store energy and have a lagging effect on current changes.

In some embodiments, the regulating circuit 300 further includes a battery capacitor C2, a first end of the battery capacitor C2 being connected to second ends of the inductive members L1, L2, and L3, and a second end of the battery capacitor C2 being connected to a second end of the battery side S2, that is, connected to a second end of the bridge arm set 310 (for example, a connection point of the lower bridge arm of the at least one bridge arm).

In some embodiments, the regulating circuit 300 further includes a first control switch K1 and a bus side S1 configured to connect to an external power source, where a first end of the first control switch K1 is connected to a first end of the bus side S1, a second end of the first control switch K1 is connected to a first end of the bridge arm set 330 (for example, a connection point of the upper bridge arm of the at least one bridge arm), and a second end of the bus side S1 is connected to the second end of the bridge arm set 330 (for example, a connection point of the lower bridge arm of the at least one bridge arm). As described above, the external power source may be a photovoltaic panel, a power grid, or the like. The bus side S1 of the regulating circuit may be directly connected to the external power source or connected to the external power source through the power converter system 220 described in FIG. 2.

In some embodiments, the regulating circuit 300 further includes a second control switch K2 and a third control switch K3, where a first end of the second control switch K2 is connected to the second end of the first control switch K1, a second end of the second control switch K2 is connected to the first end of the battery side S2, a first end of the third control switch K3 is connected to the second ends of the inductive members L1, L2, and L3, and a second end of the third control switch K3 is connected to the second end of the second control switch K2.

At least one of the first control switch K1, the second control switch K2, and the third control switch K3 may be a contactor or a controllable switching device such as or a MOSFET (Metal-Oxide-Semiconductor Field-Effect Transistor). As shown in FIG. 3, if only the first control switch K1 and the third control switch K3 are turned on, the external power source and the battery are connected together through the power module 310. In this case, the power module can play its role of regulating voltage to regulate the voltage transmitted between the external power source and the battery. In addition, if only the second control switch K2 is turned on, the battery is disconnected from the external power source. In this case, a current loop can be formed between the battery 230 and the power module 310 by controlling the switching devices in the power module 310 to heat the battery. Details will be provided later.

In some embodiments, the regulating circuit 300 may further include a bus capacitor C1 and a pre-charging control apparatus Y4, where the bus capacitor C1 is connected in parallel with each of the bridge arms Q1, Q2, and Q3, and the pre-charging control apparatus Y4 is connected in parallel with one of the first control switch K1, the second control switch K2, and the third control switch K3.

For example, as shown in FIG. 3, the pre-charging control apparatus Y4 is connected in parallel with the first control switch K1. In this case, the external power source can perform power-on pre-charging on the bus capacitor C1 by turning on the pre-charging control apparatus Y4. For another example, the pre-charging control apparatus Y4 is connected in parallel with the third control switch K3. In this case, the battery can perform power-on pre-charging on the battery capacitor C2 by turning on the pre-charging control apparatus Y4. For another example, the pre-charging control apparatus can also be connected in parallel with the second control switch. For another example, two pre-charging control apparatuses can be provided to be connected in parallel with the first control switch and the second control switch respectively. This application is not limited to the above examples.

In some embodiments, the pre-charging control apparatus Y4 may include a resistance element R1 and a fourth control switch K4. The fourth control switch may be a contactor or a controllable power semiconductor device such as a MOSFET.

FIG. 6 shows a regulating method 600 of a regulating circuit (such as the regulating circuit 300 shown in FIG. 3) for a battery according to some embodiments of this application. The regulating method 600 can be executed at a controller of the regulating circuit. The regulating circuit may include a power module and a battery side configured to connect to the battery, where the power module includes a bridge arm set and at least one inductive member, the bridge arm set being connected in parallel with the battery and including multiple switching devices, and a first end of each inductive member being connected to the bridge arm set. The regulating method may include: step S601. determining whether to regulate the battery; and step S602. at least controlling, in response to determining to regulate the battery, the multiple switching devices of the bridge arm set to form a current loop with a first current direction or a current loop with a second current direction between the battery and the power module, where the first current direction and the second current direction are opposite at the battery.

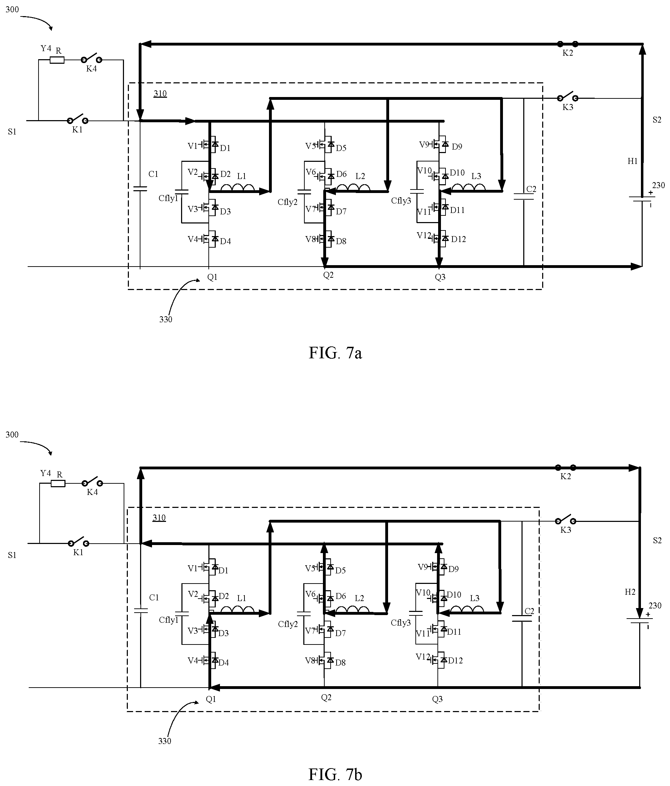

In some examples, whether to regulate the battery (for example, heating) can be determined according to a related instruction from the upper-layer controller. Alternatively, the regulating circuit can determine on its own, based on a parameter of the battery such as temperature, voltage, or state of charge, whether to regulate the battery (for example, heating). After determining that the battery needs to be heated, as shown in FIGs. 7a and 7b, a current loop H1 or H2 can be formed between the power module 310 and the battery 230 by controlling the switching devices in the power module 310, that is, different current loops are formed between the power module 310 and the battery 230 by controlling the switching devices in the power module 310 to be in different states.

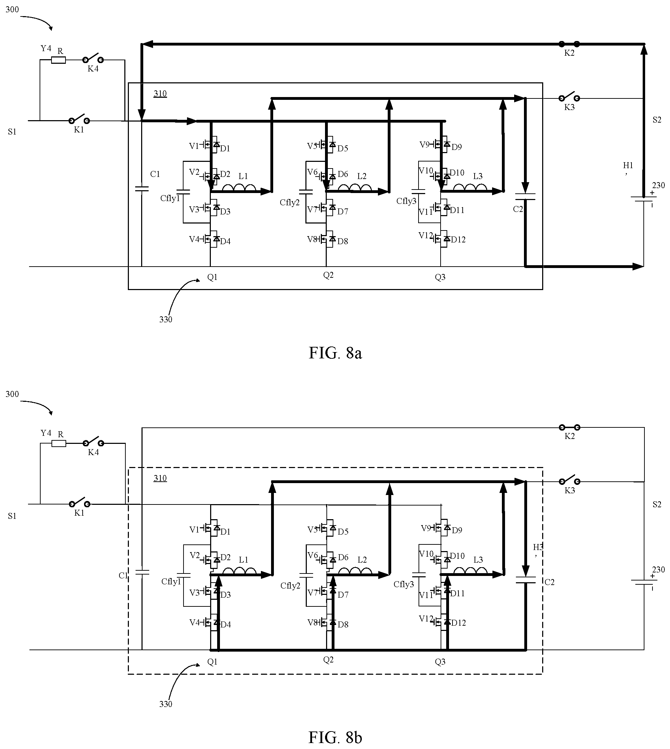

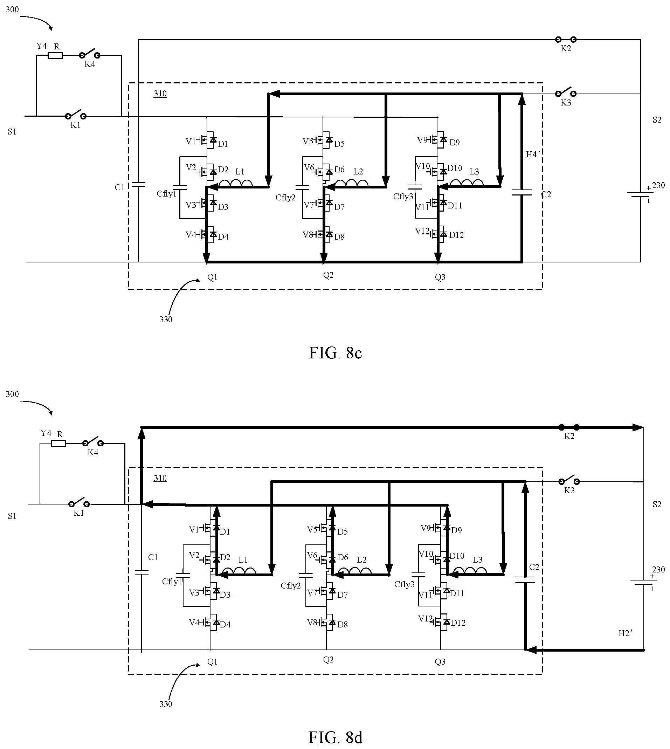

As shown in FIGs. 7a and 7b, one of a current loop H1 with a first current direction and a current loop H2 with a second current direction can be selectively formed between the battery 230 and the power module 310 by controlling the switching devices in the bridge arm set 330. Similarly, as shown in FIGs. 8a and 8d, a current loop H1' with a first current direction and a current loop H2' with a second current direction can be formed between the battery 230 and the power module 310 by controlling the switching devices in the bridge arm set 330. The first current direction and the second current direction are opposite at the battery, thus allowing the battery to be charged and discharged to implement pulse heating of the battery. It should be noted that whether the current loop with the first current direction and the current loop with the second current direction are for charging or discharging the battery depends on the direction of the positive and negative electrodes of the battery. Although FIG. 3, FIG. 7a, FIG. 7b, and FIGs. 8a to 8d show the positive electrode of the battery as the first end of the battery, it should be understood that the negative electrode of the battery can alternatively be used as the first end of the battery.

In the above embodiments, the power module can be utilized to charge and discharge the battery, thus implementing battery regulation (for example, pulse heating) to meet requirements for normal battery operation.

When one regulating circuit is connected to each battery in a system having multiple batteries, an independent current loop can be formed between the power module and the battery to separately heat the battery in the above embodiment. In this way, heating control can be implemented separately for multiple batteries, and the multiple batteries can be heated simultaneously to improve heating efficiency.

According to some embodiments of this application, the bridge arm set includes at least one bridge arm, and each bridge arm includes at least two corresponding switching devices among the multiple switching devices. The first end of each inductive member is connected between two switching devices of a corresponding bridge arm among the at least one bridge arm. The at least controlling, in response to determining to regulate the regulating circuit, the multiple switching devices of the bridge arm set to form a current loop with a first current direction or a current loop with a second current direction between the battery and the power module includes: controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module.

That is, for each bridge arm, the switching device of each bridge arm on one side of the corresponding inductive member (for example, one of the upper bridge arm or lower bridge arm of the bridge arm) can be controlled to turn on, and the switching device of the bridge arm on the other side of the corresponding inductive member (for example, the other of the upper bridge arm or lower bridge arm of the bridge arm) can be controlled to turn off. For example, as shown in FIG. 7a, the switching devices V1 and V2 on the upper bridge arm of the bridge arm Q1 are controlled to turn on and the switching devices V3 and V4 on the lower bridge arm thereof are controlled to turn off, while the switching devices V5, V6, V9, and V10 on the upper bridge arms of the bridge arms Q2 and Q3 are controlled to turn off and the switching devices V7, V8, V11, and V12 on the lower bridge arms thereof are controlled to turn on.

In this way, each bridge arm can have only the upper bridge arm or the lower bridge arm turned on, to ensure that the formed current loop passes through the inductive member in the power module, so as to use the inductive member in the power module to charge and discharge the battery to implement the regulation of the battery (for example, pulse heating).

According to some embodiments of this application, the at least one bridge arm includes multiple bridge arms connected in parallel, and the at least one inductive member includes multiple inductive members, second ends of the inductive members being connected to each other. The controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module includes: controlling the switching device of a part of the multiple bridge arms between a corresponding inductive member and a first end of the battery side to turn on and the switching device of the part of the multiple bridge arms between the corresponding inductive member and a second end of the battery side to turn off, and controlling the switching device of another part of the multiple bridge arms between a corresponding inductive member and the second end of the battery side to turn on and the switching device of the another part of the multiple bridge arms between the corresponding inductive member and the first end of the battery side to turn off, to form the current loop with the first current direction; and controlling the on switching devices among the multiple switching devices to turn off and the off switching devices among the multiple switching devices to turn on, to form the current loop with the second current direction.

That is, for the bridge arm set with multiple bridge arms, a part of the bridge arms can be selected, the switching devices thereof (that is, upper bridge arms) between the corresponding inductive member and the first end of the battery side are controlled to turn on and the switching devices thereof (that is, lower bridge arms) between the corresponding inductive member and the second end of the battery side are controlled to turn off; and another part of the bridge arms can be selected, the switching devices thereof (that is, lower bridge arms) between the corresponding inductive member and the second end of the battery side are controlled to turn on and the switching devices thereof (that is, upper bridge arms) between the corresponding inductive member and the first end of the battery side are controlled to turn off. For example, as shown in FIG. 7a, the switching devices V1 and V2 on the upper bridge arm of the bridge arm Q1 are controlled to turn on and the switching devices V3 and V4 on the lower bridge arm thereof are controlled to turn off, while the switching devices V5, V6, V9, and V10 on the upper bridge arms of the bridge arms Q2 and Q3 are controlled to turn off and the switching devices V7, V8, V11, and V12 on the lower bridge arms thereof are controlled to turn on. In this way, a current loop H1 with the first current direction can be formed between the inductive members L1, L2, and L3 of the power module 310 and the battery 230. Then, as shown in FIG. 7b, the switching devices previously turned on are turned off, that is, the switching devices V1 and V2 on the upper bridge arm of the bridge arm Q1 are turned off and the switching devices V3 and V4 on the lower bridge arm thereof are turned on, the switching devices V5, V6, V9, and V10 on the upper bridge arms of the bridge arms Q2 and Q3 are turned on, and the switching devices V7, V8, V11, and V12 on the lower bridge arms thereof are turned off. In this case, due to the lagging effect of the inductive members L1, L2, and L3 on the current direction change, the currents at the inductive members L1, L2, and L3 can continue to flow in the original directions, forming a current with a second current direction in the new current loop H2, thus changing the current direction at the battery. Alternatively, in FIG. 7a, the upper bridge arms of the bridge arms Q1 and Q2 can be controlled to turn on and the lower bridge arms thereof can be controlled to turn off, while the upper bridge arm of the bridge arm Q3 can be controlled to turn off and the lower bridge arm thereof can be controlled to turn on. This application is not limited to the above examples. It should be noted that the above steps should be performed in sequence.

In the above embodiment, the lagging effect of the inductive member on the current change is fully utilized to quickly charge and discharge the battery while preventing the inductive member from obstructing the current commutation, thus increasing the frequency of battery regulation (for example, pulse heating), and improving the efficiency of battery regulation (for example, heating).

According to some embodiments of this application, the regulating circuit further includes a battery capacitor, a first end of the battery capacitor being connected to a second end of each inductive member, and a second end of the battery capacitor being connected to a second end of the battery side. The controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module includes: controlling the switching device of each bridge arm between a corresponding inductive member and a first end of the battery side to turn on and the switching device of each bridge arm between the corresponding inductive member and a second end of the battery side to turn off, to form the current loop with the first current direction; and at least controlling the switching device of each bridge arm between a corresponding inductive member and the second end of the battery side to turn off, to form the current loop with the second current direction.

That is, the switching device of each bridge arm (that is, the upper bridge arm) between the corresponding inductive member and the first end of the battery side can be controlled to turn on, and the switching device (that is, the lower bridge arm) between the corresponding inductive member and the second end of the battery side can be controlled to turn off. As shown in FIG. 8a, for the bridge arm Q1, the switching devices V1 and V2 of the bridge arm Q1 between the corresponding inductive member L1 and the first end of the battery side S2 are controlled to turn on, and the switching devices V3 and V4 of the bridge arm Q1 between the corresponding inductive member L1 and the second end of the battery side S2 are controlled to turn off. Similarly, for the bridge arms Q2 and Q3, the switching devices V5, V6, V9, and V10 are controlled to turn on, and the switching devices V7, V8, V11, and V12 are controlled to turn off. In this way, a current loop H1' with the first current direction can be formed between the inductive members L1, L2, and L3 and the battery capacitor C2 and the battery 230. Then, as shown in FIG. 8d, the switching devices V3, V4, V7, V8, V11, and V12 of the lower bridge arms of the bridge arm Q1, Q2, and Q3 are at least controlled to turn off, so as to form a current loop H2' with the second current direction between the inductive members L1, L2, and L3 and the battery capacitor C2 and the battery 230. In a case that the switching device is a power semiconductor device (that is, including a diode), if the current direction is the same as the conduction direction of the diode, the current can flow through the diode even if the switching device is in the off state. Therefore, in the above steps, the switching devices V1, V2, V5, V6, V9, and V10 of the upper bridge arms of the bridge arms Q1, Q2, and Q3 can be controlled to turn on or off. This is because even if the switching devices V1, V2, V5, V6, V9, and V10 are turned off, the current can still flow through the diodes D1, D2, D5, D6, D9, and D10 of these switching devices. It should be noted that the above steps should be performed in sequence.

In the above embodiment, a current loop passing through the inductive member and the battery capacitor can be implemented, so that the resonance effect of the inductive member and the capacitor can be used to charge and discharge the battery, improving the efficiency of battery regulation (for example, heating).

According to some embodiments of this application, the multiple switching devices are power semiconductor devices. The at least controlling the switching device of each bridge arm between a corresponding inductive member and the second end of the battery side to turn off, to form the current loop with the second current direction includes: controlling all switching devices of each bridge arm to turn off to form a current loop with a third current direction between the battery capacitor and the bridge arm set; controlling the switching device of each bridge arm between a corresponding inductive member and the second end of the battery side to turn on to form a current loop with a fourth current direction between the battery capacitor and the bridge arm set, where the third current direction and the fourth current direction are opposite at each inductive member; and controlling the switching device of each bridge arm between the corresponding inductive member and the second end of the battery side to turn off, to form the current loop with the second current direction.

After the current loop H1' with the first current direction is formed for a period of time, the charging or discharging action of the battery causes the voltage of the battery capacitor C2 in the power module to approach the voltage of the battery 230, which affects the resonance effect between the battery capacitor C2 and the inductive members L1, L2, and L3, thus affecting the charging and discharging of the battery 230. Therefore, the voltage of the battery capacitor C2 needs to be reduced. As shown in FIG. 8b, all the switching devices in the bridge arm set 330 are turned off, so that the energy of the inductive members L1, L2, and L3 continue to flow through the diodes D3, D4, D7, D8, D11, and D12 in the switching devices of the lower bridge arms of the bridge arms Q1, Q2, and Q3, that is, consuming the energy in the inductive members. In this case, a current loop H3' with a third current direction is formed between the inductive members L1, L2, and L3 and the battery capacitor C2. Then, as shown in FIG. 8c, the switching devices V3, V4, V7, V8, V11, and V12 (that is, the lower bridge arms) of the bridge arms Q1, Q2, and Q3 between the corresponding inductive member and the second end of the battery side are controlled to turn on, and the switching devices (that is, the upper bridge arms) between the corresponding inductive member and the first end of the battery side are maintained in the off state. In this case, a current loop H4' with a fourth current direction is formed between the inductive members L1, L2, and L3 and the battery capacitor C2 for the battery capacitor C2 to charge the inductive members L1, L2, and L3, thus reducing the voltage of the battery capacitor C2. In the current loop H4', the currents at the inductive members L1, L2, and L3 have been commutated compared to the current loop H1'. After that, when the current loop H2' with the second current direction is formed, the fourth current direction at the inductive member can be used to quickly form the current loop H2' with the second current direction, thus avoiding influences of the lagging effect of the inductive member on the current change.

This can restore the resonance effect between the inductive member and the battery capacitor, and can also quickly change the current direction at the battery by utilizing the lagging effect of the inductive member on the current change, thus increasing the frequency of battery regulation (for example, pulse heating), and improving the efficiency of battery regulation (for example, heating).

According to some embodiments of this application, the regulating circuit further includes a first control switch and a bus side configured to connect to an external power source, a first end of the first control switch is connected to a first end of the bus side, a second end of the first control switch is connected to a first end of the bridge arm set, and a second end of the bus side is connected to a second end of the bridge arm set. The at least controlling, in response to determining to regulate the regulating circuit, the multiple switching devices of the bridge arm set to form a current loop with a first current direction or a current loop with a second current direction between the battery and the power module includes: at least controlling the first control switch to turn off; and controlling the multiple switching devices of the bridge arm set to form the current loop with the first current direction or the current loop with the second current direction between the battery and the power module.

That is, as shown in FIG. 7a and FIG. 8a, before heating the battery, the first control switch K1 between the bus side S1 and the power module 330 is controlled to turn off.

This allows the power module to independently regulate (for example, heating) the battery and prevents the external power source on the bus side from affecting the heating of the battery.

According to some embodiments of this application, the regulating circuit further includes a second control switch and a third control switch, where a first end of the second control switch is connected to the second end of the first control switch, a second end of the second control switch is connected to the first end of the battery side, a first end of the third control switch is connected to the second end of each inductive member, and a second end of the third control switch is connected to the second end of the second control switch. The at least controlling the first control switch to turn off includes: controlling the first control switch and the third control switch to be turned off and the second control switch to be turned on.

That is, as shown in FIG. 7a and FIG. 8a, before heating of the battery, the first control switch K1 between the bus side S1 and the power module 330 and the third control switch K3 between the inductive member elements L1, L2, and L3 and the battery side S2 are controlled to turn off, and the second control switch K2 between the bridge arm set 330 and the battery side S2 is controlled to turn on. This facilitates the use of the line between the bridge arm set 330 and the battery side S2 to heat the battery.

In this way, the regulating circuit can enter the battery regulation (for example, heating) mode. In addition, if the current loop for heating the battery is implemented through the path where the third control switch is located, the current needs to flow back to the battery through the capacitor on the bus side after passing through the inductive member. This may cause circuit instability. Compared to the third control switch, implementing a current loop for regulating the battery through the path where the second control switch is located can bypass the capacitor on the bus side, allowing for more stable battery regulation.

According to some embodiments of this application, the determining whether to regulate the battery includes: determining whether a regulation instruction is received, where the regulation instruction is used to instruct to regulate the battery; and in response to determining that the regulation instruction is received, determining to regulate the battery.

In some examples, the regulation instruction can come from the upper-layer controller, such as the local energy management system (Local Energy Management System, LEMS). Alternatively, the regulation instruction can come from the battery management system (Battery Management System, BMS).

In this way, the battery can be regulated (for example, heated) as needed to meet requirements for normal battery operation.

According to some embodiments of this application, the regulating method 600 may further include: determining whether a stop regulation instruction is received, where the stop regulation instruction is used to instruct to stop regulating the battery; and in response to determining that the stop regulation instruction is received, at least controlling all of the multiple switching devices to turn off, to stop regulating the battery.

As described above, the regulation instruction can come from the local energy management system, the battery management system, or the like.

In this way, the battery regulation (for example, heating) can be stopped as needed, thus preventing overheating of the battery or ineffective heating of the battery.

According to some other embodiments of this application, the regulating circuit can alternatively determine, based on state information of the battery, whether to regulate the battery. Specifically, the determining whether to regulate the battery may further include: obtaining state information of the battery, where the state information includes an initial temperature; determining whether the initial temperature is less than a first preset temperature threshold; and determining, in response to determining that the initial temperature is less than the first preset temperature threshold, to regulate the battery.

In some examples, the state information of the battery can be obtained through the BMS, corresponding sensor, or the like. The state information may further include a state of charge (SOC), a voltage, and the like. The initial temperature refers to a temperature of the battery at the time of performing the above step of determining whether to heat the battery. The first preset temperature threshold can be set based on experience or theory. In this way, the battery can be regulated as needed to meet the requirements of normal battery operation.

According to some embodiments of this application, the state information further includes a state of charge and a voltage. The determining, in response to determining that the initial temperature is less than the preset temperature threshold, to regulate the battery includes: in response to a first preset condition being met, determining to regulate the battery, where the first preset condition includes at least one of the state of charge being greater than or equal to a preset state of charge threshold and the voltage being greater than or equal to a preset voltage threshold. That is, after it is determined that the initial temperature of the battery is less than the preset temperature threshold, it can also be determined whether the state of charge of the battery is less than the preset state of charge threshold and/or whether the voltage of the battery is less than the preset voltage threshold. In this way, it can be determined whether the battery has sufficient energy to regulate itself. The preset state of charge threshold and the preset voltage threshold can be set based on experience or theory. In this way, regulation can be implemented when the voltage of the battery meets a specified condition, thus increasing the efficiency of battery regulation.

According to some embodiments of this application, the determining, in response to a first preset condition being met, to regulate the battery includes: determining whether the regulating circuit has a fault; and in response to determining that the regulating circuit does not have a fault, determining to regulate the battery. That is, after it is determined that the first preset condition is met, it can also be determined whether the regulating circuit has a fault. The determining whether the regulating circuit has a fault may include determining whether various components (such as the switching device, battery contactor, capacitor, and inductive member) in the regulating circuit have faults. In this way, the battery can be regulated in the case of no fault in the regulating circuit, thus improving the safety of battery regulation.

According to some embodiments of this application, the regulating method 600 may further include: obtaining a current temperature of the battery at a current moment; and in response to a second preset condition being met, at least controlling all of the multiple switching devices to turn off, to stop regulating the battery, where the second preset condition includes at least one of the current temperature being greater than or equal to a second preset temperature threshold and a difference between the current temperature and the initial temperature being less than a preset temperature rise threshold. The current moment refers to a time when the above step is performed. The second preset temperature threshold can be set based on experience or theory, and is used to indicate that the temperature of the battery can meet the requirements of normal operation. The preset temperature rise threshold can be set based on experience or theory, and is used to indicate that the temperature rise of the battery is normal. In some other embodiments, a historical temperature of the battery that is, a temperature at any moment before the current moment, may also be obtained, and used together with the current temperature to determine whether the temperature rise of the battery is abnormal. This can prevent overheating of the battery or ineffective heating of the battery, improving the safety of battery heating.

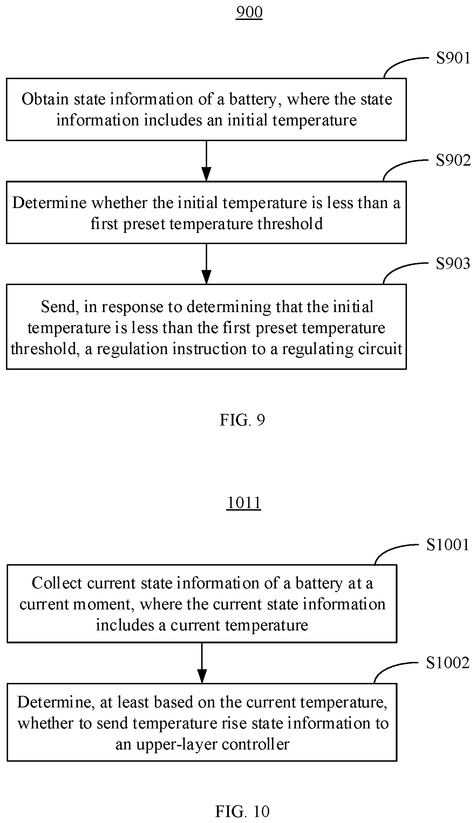

As shown in FIG. 9, some embodiments of this application provide a control method for a battery. The control method 900 may include: step S901. obtaining state information of the battery, where the state information includes an initial temperature; step S902. determining whether the initial temperature is less than a first preset temperature threshold; and step S903. sending, in response to determining that the initial temperature is less than the first preset temperature threshold, a regulation instruction to a regulating circuit, where the regulation instruction is used for the regulating method 600 in the above embodiments.

The battery, state information, initial temperature, and first preset temperature threshold described above have the same characteristics as the battery, state information, initial temperature, and first preset temperature threshold described in FIG. 6, and are not detailed herein again. The control method 900 can be executed at an upper-layer controller, such as a LEMS.

In this way, the battery can be regulated as needed to meet the requirements of normal battery operation.

According to some embodiments of this application, the state information further includes a state of charge and a voltage. The step S903 of sending, in response to determining that the initial temperature is less than the first preset temperature threshold, a regulation instruction to a regulating circuit includes: sending, in response to a first preset condition being met, the regulation instruction to the regulating circuit, where the first preset condition includes at least one of the state of charge being greater than or equal to a preset state of charge threshold and the voltage being greater than or equal to a preset voltage threshold.

That is, after it is determined that the initial temperature of the battery is less than the preset temperature threshold, it can also be determined whether the state of charge of the battery is less than the preset state of charge threshold and/or whether the voltage of the battery is less than the preset voltage threshold. The preset state of charge threshold and preset voltage threshold described above have the same characteristics as the preset state of charge threshold and preset voltage threshold described in FIG. 6, and are not detailed herein again.

In this way, regulation can be implemented when the voltage of the battery meets a specified condition, thus increasing the efficiency of battery regulation.

According to some embodiments of this application, the sending, in response to a first preset condition being met, the regulation instruction to a regulating circuit includes: determining whether the regulating circuit has a fault; and in response to determining that the regulating circuit does not have a fault, sending the regulation instruction to the regulating circuit.

That is, after it is determined that the first preset condition is met, it can also be determined whether the regulating circuit has a fault. The determining whether the regulating circuit has a fault may include determining whether various components (such as the switching device, battery contactor, capacitor, and inductive member) in the regulating circuit have faults.

In this way, the battery can be regulated in the case of no fault in the regulating circuit, thus improving the safety of battery regulation.

According to some embodiments of this application, the control method 900 may further include: determining whether temperature rise state information of the battery is received, where the temperature rise state information includes temperature rise exception information or temperature rise complete information; and in response to the temperature rise state information being received, sending a stop regulation instruction to the regulating circuit, where the stop regulation instruction is used for the regulating method 600 in the above embodiments.

The temperature rise state information can come from the battery management system or the like. The temperature rise exception information is used to indicate that there is an abnormality in the temperature rise of the battery during heating. For example, the difference between the current temperature and initial temperature (or historical temperature) of the battery is less than the preset temperature rise threshold. The temperature rise complete information is used to indicate that the battery regulation is completed. For example, the current temperature of the battery is greater than or equal to a second preset temperature threshold.

This facilitates real-time monitoring of the battery state, preventing overheating or ineffective heating of the battery.

In some other embodiments, the upper-layer controller may alternatively determine, based on the state information of the battery, whether to send a stop regulation instruction. Specifically, the control method 900 may further include: obtaining a current temperature of the battery at a current moment and a historical temperature of the battery at a historical moment; determining whether the battery is under an abnormal temperature rise based on the current temperature and the historical temperature; and in response to determining that the battery is under an abnormal temperature rise, sending a stop regulation instruction to the regulating circuit. The current moment, current temperature, historical moment, and historical temperature described above have the same characteristics as the current moment, current temperature, historical moment, and historical temperature described in FIG. 6, and are not detailed herein again.

In some other embodiments, the control method 900 may further include: obtaining the current temperature of the battery at the current moment; determining whether the current temperature is greater than or equal to a second preset temperature threshold; and in response to determining that the current temperature is greater than or equal to the second preset temperature threshold, sending a stop regulation instruction to the regulating circuit. The second preset temperature threshold described above has the same characteristics as the second preset temperature threshold described in FIG. 6, and is not detailed herein again.

As shown in FIG. 10, some embodiments of this application provide a monitoring method 1011 for a battery. The monitoring method 1011 includes: step S1001. collecting current state information of the battery at a current moment, where the current state information includes a current temperature; and step S1002. determining, at least based on the current temperature, whether to send temperature rise state information to an upper-layer controller, where the temperature rise state information is used for executing the control method 900 of the above embodiments.

The battery, current moment, current state information, current temperature, temperature rise state information, and the like described above have the same characteristics as the battery, current moment, current state information, current temperature, temperature rise state information, and the like described in FIG. 9, and are not detailed herein again. The monitoring method 1011 can be executed at the battery management system BMS or the like.

This facilitates real-time monitoring of the battery state, preventing overheating or ineffective heating of the battery.

According to some embodiments of this application, the step S1002 of determining, at least based on the current temperature, whether to send temperature rise state information to an upper-layer controller includes: determining whether the current temperature is greater than or equal to a second preset temperature threshold; and in response to determining that the current temperature is greater than or equal to the second preset temperature threshold, generating temperature rise complete information as the temperature rise state information, and sending the temperature rise state information to the upper-layer controller.

The second preset temperature threshold described above has the same characteristics as the second preset temperature threshold described in FIG. 6, and is not detailed herein again. In some examples, whether the current temperature is greater than or equal to the second preset temperature threshold can be determined in real time.

This facilitates real-time monitoring of the battery state, preventing overheating of the battery.

According to some embodiments of this application, the step S1002 of determining, at least based on the current temperature, whether to send temperature rise state information to an upper-layer controller includes: obtaining a historical temperature of the battery at a historical moment; determining whether the battery is under an abnormal temperature rise based on the current temperature and the historical temperature; and in response to determining that the battery is under an abnormal temperature rise, generating temperature rise exception information as the temperature rise state information, and sending the temperature rise state information to the upper-layer controller.

The historical moment and historical temperature described above have the same characteristics as the historical moment and historical temperature described in FIG. 6, and are not detailed herein again. In some examples, whether the battery is under an abnormal temperature rise can be determined in real time during heating of the battery. In some examples, after it is determined that the battery is not under an abnormal temperature rise, the step of determining whether the current temperature is greater than or equal to a second preset temperature threshold can be performed.

This facilitates real-time monitoring of the battery state, preventing ineffective heating of the battery.

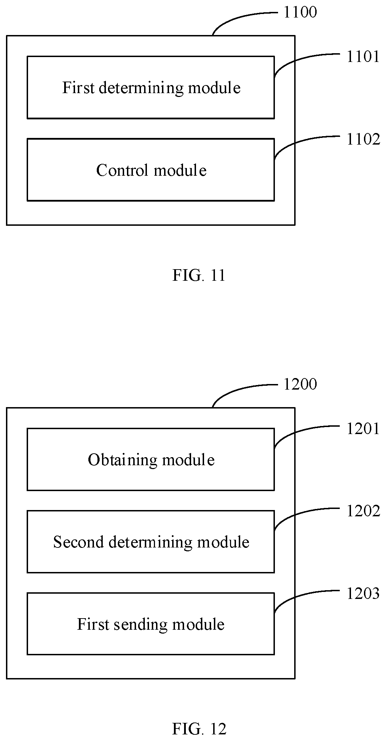

As shown in FIG. 11, some embodiments of this application provide a regulating apparatus 1100 of a regulating circuit 300 for a battery. The regulating circuit includes a power module and a battery side configured to connect to the battery, where the power module includes a bridge arm set and at least one inductive member, the bridge arm set being connected in parallel with the battery and including multiple switching devices, and a first end of each inductive member being connected to the bridge arm set. The regulating apparatus 1100 includes: a first determining module 1101 and a control module 1102. The first determining module 1101 is configured to determine whether to regulate the battery. The control module 1102 is configured to at least control, in response to determining to regulate the battery, the multiple switching devices of the bridge arm set to form a current loop with a first current direction or a current loop with a second current direction between the battery and the power module, where the first current direction and the second current direction are opposite at the battery.

It should be understood that the modules of the apparatus 1100 shown in FIG. 11 can correspond to the steps in the method 600 described with reference to FIG. 6. Therefore, the above operations, characteristics, and advantages for the method 600 are also applicable to the apparatus 1100 and its modules. For brevity, some operations, characteristics, and advantages are not repeated herein.

As described above, the switching devices in the power module are controlled so that current loops with different current directions are formed between the power module and the battery, allowing the power module to be used to charge and discharge the battery, thus implementing battery regulation (for example, pulse heating) to meet requirements for normal battery operation.

As shown in FIG. 12, some embodiments of this application provide a control apparatus 1200 for a battery. The control apparatus 1200 includes: an obtaining module 1201, a second determining module 1202, and a first sending module 1203. The obtaining module 1201 is configured to obtain state information of the battery, where the state information includes an initial temperature. The second determining module 1202 is configured to determine whether the initial temperature is less than a first preset temperature threshold. The first sending module 1203 is configured to send, in response to determining that the initial temperature is less than the first preset temperature threshold, a regulation instruction to a regulating circuit, where the regulation instruction is used to execute the regulating method 600 in the above embodiments.

It should be understood that the modules of the apparatus 1200 shown in FIG. 12 can correspond to the steps in the method 900 described with reference to FIG. 9. Therefore, the above operations, characteristics, and advantages for the method 900 are also applicable to the apparatus 1200 and its modules. For brevity, some operations, characteristics, and advantages are not repeated herein.

In this way, the battery can be regulated as needed to meet the requirements of normal battery operation.

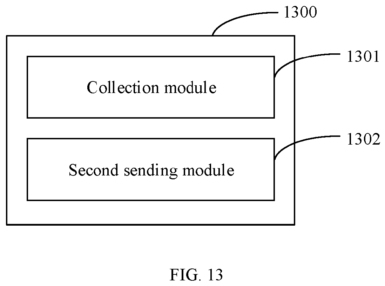

As shown in FIG. 13, some embodiments of this application provide a monitoring apparatus 1300 for a battery. The monitoring apparatus 1300 includes: a collection module 1301 and a second sending module 1302. The collection module 1301 is configured to collect current state information of the battery at a current moment, where the current state information includes a current temperature. The second sending module 1302 is configured to determine, at least based on the current temperature, whether to send temperature rise state information to an upper-layer controller, where the temperature rise state information is used for executing the control method 900 in the above embodiments.

It should be understood that the modules of the apparatus 1300 shown in FIG. 13 can correspond to the steps in the method 1011 described with reference to FIG. 10. Therefore, the above operations, characteristics, and advantages for the method 1011 are also applicable to the apparatus 1300 and its modules. For brevity, some operations, characteristics, and advantages are not repeated herein.

This facilitates real-time monitoring of the battery state, preventing overheating or ineffective heating of the battery.

Some embodiments of this application provide an electronic device including at least one processor and a memory communicatively connected to the at least one processor, where the memory stores an instruction executable by the at least one processor, and the instruction, when executed by the at least one processor, causes the at least one processor to execute the regulating method 600 or the control method 900 or the monitoring method 1011.

Some embodiments of this application provide a computer-readable storage medium storing a computer instruction, where the computer instruction is configured to cause a computer to execute the regulating method 600 or the control method 900 or the monitoring method 1011.

The embodiments of this application provide a computer program product including a computer program, where the computer program, when executed by a processor, implements the regulating method 600 or the control method 900 or the monitoring method 1011 described above.

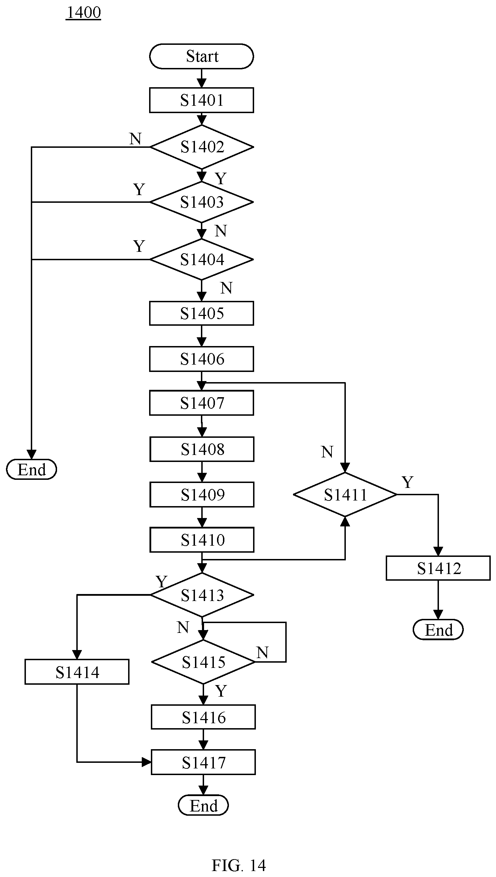

As shown in FIG. 14, some embodiments of this application provide a heating method 1400 for a battery, which can include the following steps S1401 to S1417.

Step S1401. At a BMS, collect current state information of the battery at a current moment.

Step S1402. At a LEMS, determine whether an initial temperature is less than a first preset temperature threshold.

Step S1403. At the LEMS, determine whether a state of charge is less than a preset state of charge threshold and whether a voltage is less than a preset voltage threshold.

Step S1404. At the LEMS, determine whether a regulating circuit has a fault.

Step S1405. At the LEMS, send a regulation instruction to the regulating circuit.

Step S1406. At a controller of the regulating circuit, control a first control switch and a third control switch to turn off and a second control switch to turn on.

Step S1407. At the controller of the regulating circuit, control a switching device of each bridge arm between a corresponding inductive member and a first end of a battery side to turn on, and a switching device of each bridge arm between the corresponding inductive member and a second end of the battery side to turn off, to form a current loop with a first current direction.

Step S1408. At the controller of the regulating circuit, control all the switching devices of each bridge arm to turn off to form a current loop with a third current direction between a battery capacitor and the bridge arm set.

Step S1409. At the controller of the regulating circuit, control the switching device of each bridge arm between the corresponding inductive member and the second end of the battery side to turn on, to form a current loop with a fourth current direction between the battery capacitor and the bridge arm set.

Step S1410. At the controller of the regulating circuit, control the switching device of each bridge arm between the corresponding inductive member and the second end of the battery side to turn off, to form a current loop with a second current direction.

Step S1411. At the controller of the regulating circuit, determine whether a stop regulation instruction is received.

Step S1412. At the controller of the regulating circuit, at least control all of the multiple switching devices to turn off, to stop regulating the battery.

Step S1413. At the BMS, determine whether the battery is under an abnormal temperature rise based on a current temperature and a historical temperature.

Step S1414. At the BMS, generate temperature rise exception information as temperature rise state information, and send the temperature rise state information to the LEMS.

Step S1415. At the BMS, determine whether the current temperature is greater than or equal to a second preset temperature threshold.

Step S1416. At the BMS, generate temperature rise complete information as the temperature rise state information, and send the temperature rise state information to the LEMS.

Step S1417. At the LEMS, send a stop regulation instruction to the regulating circuit.

The steps in the method 1400 have the same characteristics as the corresponding steps in the regulating method 600, the control method 900, and the monitoring method 1011. For brevity, details are not repeated herein.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A regulating method of a regulating circuit for a battery, wherein the regulating circuit comprises a power module and a battery side configured to connect to the battery, the power module comprising a bridge arm set and at least one inductive member, the bridge arm set being connected in parallel with the battery and comprising multiple switching devices, and a first end of each inductive member being connected to the bridge arm set; and
the regulating method comprises:
determining whether to regulate the battery; and
at least controlling, in response to determining to regulate the battery, the multiple switching devices of the bridge arm set to form a current loop with a first current direction or a current loop with a second current direction between the battery and the power module, wherein the first current direction and the second current direction are opposite at the battery.

2. The regulating method according to claim 1, wherein:
the bridge arm set comprises at least one bridge arm, each bridge arm comprises at least two corresponding switching devices among the multiple switching devices, and the first end of each inductive member is connected between two switching devices of a corresponding bridge arm among the at least one bridge arm; and
the at least controlling, in response to determining to regulate the regulating circuit, the multiple switching devices of the bridge arm set to form a current loop with a first current direction or a current loop with a second current direction between the battery and the power module comprises:
controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module.

3. The regulating method according to claim 2, wherein:
the at least one bridge arm comprises multiple bridge arms connected in parallel, and the at least one inductive member comprises multiple inductive members, second ends of the inductive members being connected to each other; and
the controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module comprises:
controlling the switching device of a part of the multiple bridge arms between a corresponding inductive member and a first end of the battery side to be turn on and the switching device of the part of the multiple bridge arms between the corresponding inductive member and a second end of the battery side to turn off, and controlling the switching device of another part of the multiple bridge arms between a corresponding inductive member and the second end of the battery side to turn on and the switching device of the another part of the multiple bridge arms between the corresponding inductive member and the first end of the battery side to turn off, to form the current loop with the first current direction; and
controlling the on switching devices among the multiple switching devices to turn off and the off switching devices among the multiple switching devices to turn on, to form the current loop with the second current direction.

4. The regulating method according to claim 2, wherein:
the regulating circuit further comprises a battery capacitor, a first end of the battery capacitor being connected to a second end of each inductive member, and a second end of the battery capacitor being connected to a second end of the battery side; and
the controlling the switching device of each bridge arm on one side of the corresponding inductive member to turn on and the switching device of each bridge arm on the other side of the corresponding inductive member to turn off, to form the current loop with the first current direction or the current loop with the second current direction between the battery and the power module comprises:
controlling the switching device of each bridge arm between a corresponding inductive member and a first end of the battery side to turn on and the switching device of each bridge arm between the corresponding inductive member and a second end of the battery side to turn off, to form the current loop with the first current direction; and
at least controlling the switching device of each bridge arm between a corresponding inductive member and the second end of the battery side to turn off, to form the current loop with the second current direction.

5. The regulating method according to claim 4, wherein the multiple switching devices are power semiconductor devices, and the at least controlling the switching device of each bridge arm between a corresponding inductive member and the second end of the battery side to turn off, to form the current loop with the second current direction comprises:
controlling all switching devices of each bridge arm to turn off to form a current loop with a third current direction between the battery capacitor and the bridge arm set;
controlling the switching device of each bridge arm between a corresponding inductive member and the second end of the battery side to turn on to form a current loop with a fourth current direction between the battery capacitor and the bridge arm set, wherein the third current direction and the fourth current direction are opposite at each inductive member; and
controlling the switching device of each bridge arm between a corresponding inductive member and the second end of the battery side to turn off, to form the current loop with the second current direction.

6. The regulating method according to any one of claims 1 to 5, wherein:
the regulating circuit further comprises a first control switch and a bus side configured to connect to an external power source, a first end of the first control switch is connected to a first end of the bus side, a second end of the first control switch is connected to a first end of the bridge arm set, and a second end of the bus side is connected to a second end of the bridge arm set; and
the at least controlling, in response to determining to regulate the regulating circuit, the multiple switching devices of the bridge arm set to form a current loop with a first current direction or a current loop with a second current direction between the battery and the power module comprises:
at least controlling the first control switch to turn off; and
controlling the multiple switching devices of the bridge arm set to form the current loop with the first current direction or the current loop with the second current direction between the battery and the power module.

7. The regulating method according to claim 6, wherein:
the regulating circuit further comprises a second control switch and a third control switch, a first end of the second control switch is connected to the second end of the first control switch, a second end of the second control switch is connected to the first end of the battery side, a first end of the third control switch is connected to the second end of each inductive member, and a second end of the third control switch is connected to the second end of the second control switch; and
the at least controlling the first control switch to turn off comprises:
controlling the first control switch and the third control switch to turn off and the second control switch to turn on.

8. The regulating method according to any one of claims 1 to 7, wherein the determining whether to regulate the battery comprises:
determining whether a regulation instruction is received, wherein the regulation instruction is used to instruct to regulate the battery; and
in response to determining that the regulation instruction is received, determining to regulate the battery.

9. The regulating method according to claim 8, further comprising:
determining whether a stop regulation instruction is received, wherein the stop regulation instruction is used to instruct to stop regulating the battery; and
in response to determining that the stop regulation instruction is received, at least controlling all of the multiple switching devices to turn off, to stop regulating the battery.

10. A control method for a battery, comprising:
obtaining state information of the battery, wherein the state information comprises an initial temperature;
determining whether the initial temperature is less than a first preset temperature threshold; and
sending, in response to determining that the initial temperature is less than the first preset temperature threshold, a regulation instruction to the regulating circuit, wherein the regulation instruction is used to execute the regulating method according to claim 8 or 9.

11. The control method according to claim 10, wherein the state information further comprises a state of charge and a voltage; and the sending, in response to determining that the initial temperature is less than the first preset temperature threshold, a regulation instruction to the regulating circuit comprises:
sending, in response to a first preset condition being met, the regulation instruction to the regulating circuit, wherein the first preset condition comprises at least one of the state of charge being greater than or equal to a preset state of charge threshold and the voltage being greater than or equal to a preset voltage threshold.

12. The control method according to claim 11, wherein the sending, in response to a first preset condition being met, the regulation instruction to the regulating circuit comprises:
determining whether the regulating circuit has a fault; and
in response to determining that the regulating circuit does not have a fault, sending the regulation instruction to the regulating circuit.

13. The control method according to any one of claims 10 to 12, further comprising:
determining whether temperature rise state information of the battery is received, wherein the temperature rise state information comprises temperature rise exception information or temperature rise complete information; and
in response to the temperature rise state information being received, sending a stop regulation instruction to the regulating circuit, wherein the stop regulation instruction is used to execute the regulating method according to claim 9.

14. A monitoring method for a battery, comprising:
collecting current state information of the battery at a current moment, wherein the current state information comprises a current temperature; and
determining, at least based on the current temperature, whether to send temperature rise state information to an upper-layer controller, wherein the temperature rise state information is used for executing the control method according to claim 13.

15. The management method according to claim 14, wherein the determining, at least based on the current temperature, whether to send temperature rise state information to an upper-layer controller comprises:
determining whether the current temperature is greater than or equal to a second preset temperature threshold; and
in response to determining that the current temperature is greater than or equal to the second preset temperature threshold, generating temperature rise complete information as the temperature rise state information and sending the temperature rise state information to the upper-layer controller.

16. The management method according to claim 14, wherein the determining, at least based on the current temperature, whether to send temperature rise state information to an upper-layer controller comprises:
obtaining a historical temperature of the battery at a historical moment;
determining, based on the current temperature and the historical temperature, whether the battery is under an abnormal temperature rise; and
in response to determining that the battery is under an abnormal temperature rise, generating temperature rise exception information as the temperature rise state information and sending the temperature rise state information to the upper-layer controller.

17. A regulating apparatus of a regulating circuit for a battery, wherein the regulating circuit comprises a power module and a battery side configured to connect to the battery, the power module comprising a bridge arm set and at least one inductive member, the bridge arm set being connected in parallel with the battery and comprising multiple switching devices, and a first end of each inductive member being connected to the bridge arm set; and
the regulating apparatus comprises:
a first determining module, the first determining module being configured to determine whether to regulate the battery; and
a control module, the control module being configured to at least control, in response to determining to regulate the battery, the multiple switching devices of the bridge arm set to form a current loop with a first current direction or a current loop with a second current direction between the battery and the power module, wherein the first current direction and the second current direction are opposite at the battery.

18. A control apparatus for a battery, comprising:
an obtaining module, the obtaining module being configured to obtain state information of the battery, wherein the state information comprises an initial temperature;
a second determining module, the second determining module being configured to determine whether the initial temperature is less than a first preset temperature threshold; and
a first sending module, the first sending module being configured to send, in response to determining that the initial temperature is less than the first preset temperature threshold, a regulation instruction to the regulating circuit, wherein the regulation instruction is used to execute the regulating method according to claim 8 or 9.

19. A monitoring apparatus for a battery, comprising:
a collection module, the collection module being configured to collect current state information of the battery at a current moment, wherein the current state information comprises a current temperature; and
a second sending module, the second sending module being configured to determine, at least based on the current temperature, whether to send temperature rise state information to an upper-layer controller, wherein the temperature rise state information is used for executing the control method according to claim 13.

20. An electronic device, comprising at least one processor and a memory communicatively connected to the at least one processor, wherein
the memory stores an instruction executable by the at least one processor, and the instruction, when executed by the at least one processor, causes the at least one processor to execute the regulating method according to any one of claims 1 to 9, the control method according to any one of claims 10 to 13, or the monitoring method according to any one of claims 14 to 16.

21. A computer-readable storage medium storing a computer instruction, wherein the computer instruction is used to cause a computer to execute the regulating method according to any one of claims 1 to 9, the control method according to any one of claims 10 to 13, or the monitoring method according to any one of claims 14 to 16.

22. A computer program product, comprising a computer program, wherein when the computer program is executed by a processor, the regulating method according to any one of claims 1 to 9, the control method according to any one of claims 10 to 13, or the monitoring method according to any one of claims 14 to 16 is implemented.
